# EUROPEAN PATENT SPECIFICATION

(11) **EP 3 273 112 B1**
(45) Date of publication and mention of the grant of the patent: **09.02.2022**
(21) Application number: 16382357.8
(22) Date of filing: 22.07.2016
(51) Int. Cl.: F16H 63/34

(54) **RELEASE DEVICE FOR RELEASING A MOTOR VEHICLE TRANSMISSION AND MOTOR VEHICLE TRANSMISSION HAVING SAID RELEASE DEVICE**
LÖSEVORRICHTUNG ZUM LÖSEN EINES KRAFTFAHRZEUGGETRIEBES UND KRAFTFAHRZEUGGETRIEBE MIT DIESER LÖSEVORRICHTUNG
DISPOSITIF DE LIBÉRATION POUR LIBÉRER UNE TRANSMISSION DE VÉHICULE À MOTEUR ET TRANSMISSION POUR VÉHICULE AUTOMOBILE COMPORTANT LEDIT DISPOSITIF DE LIBÉRATION

(43) Date of publication of application: 24.01.2018
(73) Proprietor: Fico Triad, S.A., 08028 Barcelona (ES)
(72) Inventor: GIMENO GRANÉ, Santiago, 08232 VILADECAVALLS (ES); CASADO ALCARAZ, Daniel, 08232 VILADECAVALLS (ES); BRAVO DOMÍNGUEZ, Raúl, 08232 VILADECAVALLS (ES); FERRÉ RIPOLL, Jaume, 08232 VILADECAVALLS (ES)
(74) Representative: ZBM Patents - Zea, Barlocci & Markvardsen

(56) References cited:
- US-A1- 2011 240 437
- US-A1- 2014 305 245
- US-A1- 2014 311 269

## Description

The present disclosure relates to motor vehicle gearshift systems for controlling motor vehicle transmissions and in particular to a release device for releasing a motor vehicle transmission in certain situations.

### BACKGROUND

In motor vehicles equipped with automatic transmissions, the user or driver is allowed to operate the shifter lever to place the transmission into a number of gearshift positions. When the transmission has been driven into said specific gearshift position, such as for example a park position (P), when the motor vehicle is to be parked, in which the vehicle transmission is locked and wheels can not be moved. This is accomplished for example through a park locking element adapted for engaging a notched ring that is attached to a transmission output shaft when the transmission shifter lever is in the park position. When the park locking element engages the notched ring in the transmission output shaft, the transmission output shaft is locked and the wheels of the vehicle can not be moved as stated above.

When it is desired to drive the vehicle, the user or driver actuates the shifter out of the park position. This action is in many cases combined by other actions on the part of the user such as depressing the brake pedal. Such single action, or combined actions, causes the park locking element to move out of engagement with the transmission output shaft such that the transmission is released and the wheels of the vehicle are allowed to move.

In electronic gearshift devices, driving of the above mentioned park locking element out of engagement with the transmission output shaft for releasing the transmission is carried out by means of an electric motor that drives a shifter actuating shaft that is connected with the vehicle transmission.

In the event of failure of the electrical power supply to the electric motor when the motor vehicle transmission is, for example, in the park position, the shifter becomes stuck in said gearshift position with the motor vehicle transmission locked such that the vehicle can not be moved. In these cases, for releasing a shifter that is locked in said specific gearshift position, e.g. a park gearshift position, it is known to use a tool, for example a small screwdriver or similarly shaped object to move the shifter out of said gearshift position. The tool is inserted into a slot that is located on the motor vehicle gearbox and then pivoted so as cause the park locking element to come out of engagement with the transmission output shaft. The shifter can be then moved by the user to the desired gearshift position, in this case, out of the park position, for example into the neutral position, so as to move the vehicle.

US9062752 B provides a shifter mechanism for a vehicle automatic transmission comprising a shift lever and a lever assembly that is associated with the gearbox. The lever assembly includes a variable length lever that is adapted to move the shift lever to manually release a park lock of the automatic transmission, for example in a situation where the vehicle experiences a loss of electrical power.

US9140360 B discloses a device for manually releasing a park gearshift position in a motor vehicle transmission. The device comprises a slidable rod member that is connected to a cable, a locking clip that is joined to a housing and a locking part that is locked by the locking clip so as to prevent the rod member from being separated from the housing. As the cable is pulled, the rod member is also pulled together with the locking clip and the housing to which the locking part is locked causing a shift control lever to be rotated to a position to release the park gearshift position.

US2011240437 A discloses a device for actuating a parking lock comprising an electric actuator with a moveable actuator output element. When the actuator output element is moved in a first direction, it disengages the parking lock and when moved in an opposite second direction, it engages the parking lock. The actuator output element is connected to the parking lock by a clutch which is disengageable, through an emergency release mechanism, to permit manual movement of the clutch in the first direction to disengage the parking lock.

In particular, this document discloses: a release device for releasing a motor vehicle transmission from a shifter actuating shaft, the release device comprising: a connecting element adapted for releasably connecting a motor vehicle transmission with the shifter actuating shaft; biasing means acting on the connecting element into a position so as to arrange the connecting element and the shifter actuating shaft for operating the motor vehicle transmission; and a locking member associated with the connecting element and adapted to restrict the relative movement between the shifter actuating shaft and the connecting element.

The above prior art devices suffer the disadvantages of requiring skilled personnel to act directly on the gearbox to release the automatic transmission in order to move the vehicle in the event of failure in the operation of the shifter actuating shaft.

### SUMMARY

A release device is provided herein for releasing a motor vehicle transmission from a shifter actuating shaft, that is, a shaft or similar actuating member that operates the motor vehicle shifter in the event of failure in the operation of the shifter actuating shaft. Such release device is intended to be arranged anywhere between the motor vehicle transmission, such as the gearbox, and the driving means.

The present release device has been shown to at least reduce the above mentioned disadvantages while providing additional advantages as it will be clear in the following.

The invention is defined in independent claims 1 and 2.

The release device comprises a connecting element such as a sliding element adapted for releasably connecting the motor vehicle transmission with the shifter actuating shaft. In some examples, the shifter actuating shaft could be part of the present release device but the present release device is not necessarily supplied with it.

Biasing means, such as for example a spring member or similar means, are included acting on the connecting element into a position so as to connect the connecting element with the shifter actuating shaft for operating the motor vehicle transmission.

The present release device further comprises a locking member, for example in the form of a locking clip, associated with the connecting element and adapted to restrict the relative movement between the shifter actuating shaft and the connecting element. In some examples, the locking member could be adapted to be driven when the motor vehicle transmission is already out of the park gearshift position and the shifter actuating shaft can not be actuated. Stop means are also included. The stop means are associated with the above mentioned shifter actuating shaft for cooperating with the locking member. In one example, the stop means may be formed integral with the shifter actuating shaft. In this example, the shifter actuating shaft itself could act as stop means. In other examples, the stop means may be a separate part that can be fixedly or movably attached to the shifter actuating shaft. In any case, such stop means comprise one or more protruding portions adapted for cooperating with the locking member.

The way the stop means cooperate with the locking member is such that:
- when the stop means is driven to move along a first direction, the protruding portion abuts the locking member causing the locking member to move together with the connecting element along said first direction operating the motor vehicle transmission, and
- when the stop means is driven to move along a second, opposite direction, the protruding portion does not abut the locking member allowing the locking member acting on the biasing means, e.g. compressing the spring member, with the biasing means moving together with the connecting element and the locking member, operating the motor vehicle transmission.

The protruding portion of the stop means is arranged to cooperate with the locking member according to different positions. When the locking member is in a first position, the protruding portion abuts the locking member causing the stop means to be locked against the locking member only in said first direction. When the locking member is in a second position, the protruding portion does not abut the locking member allowing the connecting element to be moved relative to the stop means in both in said first direction and said second, opposite direction.

According to claim 1, the shifter actuating shaft comprises a worm screw associated with the stop means. In this case, as the worm screw is rotated by a suitable driving means the stop means are caused to be displaced. According to claim 2, the shifter actuating shaft is adapted to be driven according to a longitudinal movement, wherein the shifter actuating shaft is formed integral with the stop means.

Said driving means are configured for driving the shifter actuating shaft for operating the motor vehicle transmission. The shaft driving means may for example comprise an electric motor. Other shaft driving means are of course not ruled out for driving the motor vehicle transmission.

In preferred examples, the present release device may further comprise emergency driving means configured for operating the connecting element to move or displace it so as to operate the motor vehicle transmission out of one gearshift position, for example out of the park gearshift position, in the event that the shifter actuating shaft can not be driven. This may occur, for example, when a power failure occurs and the electric motor can not be powered, or when the electric motor is broken, etc.

The emergency driving means include an actuating element which in a preferred example is a separate element, but it could be a permanent part of the release device. Examples of actuating elements include at least one selected from a tool (e.g. a screwdriver), a flange, a rod, a key and the like. The actuating element may include a driving portion, for example a protruding portion formed at one end of the actuating element, proximate the connecting element. Said actuating element driving portion is suitable driving the motor vehicle transmission out of the one gearshift position, for example out of the park position, in case the shifter actuating shaft can not be driven, for example, when a power failure occurs such that the electric motor can not be powered, or when the electric motor is broken, as stated above.

A slot may be formed in a housing where at least the stop means and the connecting element are received. Said slot may be adapted such that the above mentioned actuating element can be inserted therethrough. The slot may be part of the emergency driving means. Retainer means may be provided for retaining the actuating element in a specific gearshift position, for example out of the park position. Once the vehicle transmission is desired to be driven into the park position again, for example, the actuating element is removed from the retainer means and the release device housing such that the vehicle transmission is driven back into the park position through the spring effect of the biasing means.

Under an emergency condition, for example in the event that the shifter actuating shaft can not be driven out of the parking position, the user advantageously makes use of the emergency driving means. By means of the actuating element, such as a tool like a screwdriver or the like, the connecting element is operated to be displaced for driving the motor vehicle transmission out of the park gearshift position. This is of course carried without the operation of the shifter actuating shaft due to the above mentioned emergency condition, e.g. a failure in the electrical power supply. The actuating element of the emergency driving means is thus displaced causing the motor vehicle transmission to be driven out of the park gearshift position. This causes the biasing means to be compressed against the stop means. When the motor vehicle transmission has been released from the shifter actuating shaft, the actuating element, i.e. the tool, can be then removed from the housing once the vehicle has been moved as necessary. The compressed biasing means then returns to its rest position causing the connecting element to be displaced in the opposite direction causing the motor vehicle transmission to be driven again into the park gearshift position, in this example.

The present disclosure further relates to a vehicle transmission that comprises a shifter actuating shaft for operating the vehicle transmission into different gearshift positions, such as for example park, reverse, neutral, drive, etc., and the release device described above for releasing said vehicle transmission from the shifter actuating shaft.

With the above release device, the vehicle transmission can be efficiently released from the shifter actuating shaft, for example, out of the park gearshift position, very easily, without requiring to act on or near the vehicle gear box and in general without requiring skilled personnel to perform the operation of releasing vehicle transmission from the shifter actuating shaft.

Additional objects, advantages and features of examples of the present release device will become apparent to those skilled in the art upon examination of the description, or may be learned by practice thereof.

### BRIEF DESCRIPTION OF THE DRAWINGS

Particular implementations of the present release device will be described in the following by way of non-limiting examples, with reference to the appended drawings, in which:
Figure 1 diagrammatically shows one example of the present release device in a condition when the motor vehicle transmission is in the park gearshift position, and under a normal operation, that is, when the shifter actuating shaft can be driven by the electric motor, and with the housing schematically represented;
Figure 2 shows the example of the release device shown in figure 1 with the housing removed therefrom;
Figure 3 diagrammatically shows the example of the release device shown in figures 1 and 2, in a condition when the motor vehicle transmission is out of the park gearshift position, under said normal operation, and with the housing removed therefrom;
Figure 4 diagrammatically shows the example of the present release device in a condition when it is manually released out of the park gearshift position in the event that the shifter actuating shaft can not be driven by the electric motor, and with the housing removed therefrom;
Figure 5 diagrammatically shows the example of the present release device when the motor vehicle transmission is in the park gearshift position after the motor vehicle transmission has been driven automatically into the park gearshift position from another gearshift position due to an emergency process, and with the housing removed therefrom; and
Figure 6 diagrammatically shows the example of the present release device in figure 5 when the motor vehicle transmission is manually released out of the park gearshift position after the motor vehicle transmission has been driven automatically into the park gearshift position from another gearshift position due to an emergency process, and with the housing removed therefrom.

### DETAILED DESCRIPTION OF EXAMPLES

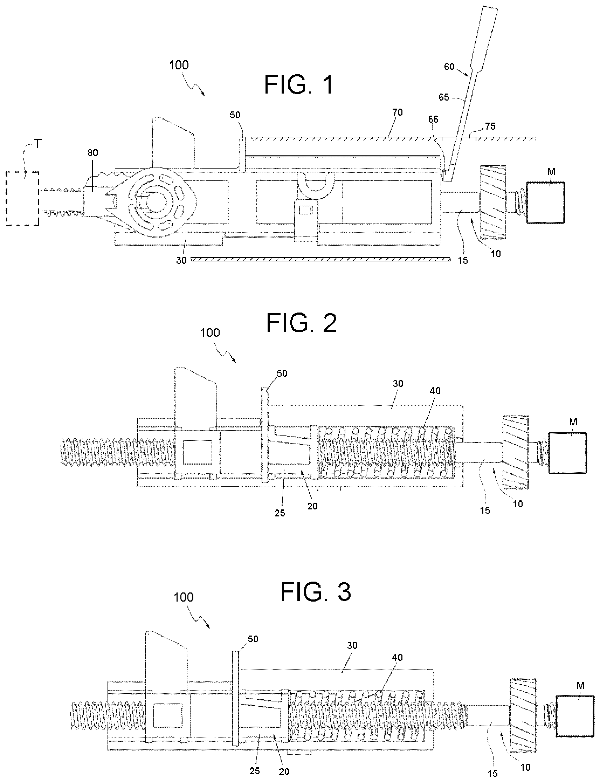

The non limiting example of the release device 100 shown in figure 1 is intended for releasing a motor vehicle transmission T from a shifter actuating shaft 10. The release device 100 is intended to be arranged anywhere between the motor vehicle transmission T, e.g. the gearbox, and means for driving the shifter actuating shaft 10.

In this specific example, the shifter actuating shaft 10 comprises a worm screw 15 that is driven by driving means which, in this example, comprise an electric motor M. In different examples, however, the shifter actuating shaft 10 could be adapted to be driven according to a longitudinal movement.

The release device 100 includes a housing 70 that has been schematically depicted in figure 1. At least a connecting element 30 is movably received inside the housing 70. In the example shown, the connecting element 30 comprises a sliding carriage 30 that can be displaced to the right and to the left in the figures of the drawings. A control cable 80 is attached to one portion of the connecting element 30 for connecting it with the motor vehicle transmission T. The present release device 100 is thus arranged to releasably connect the motor vehicle transmission T with the worm screw 15 as it will be describe further below.

Biasing means 40 are also provided as shown in the figures. In this example, the biasing means comprise a compression spring 40. However, other biasing means 40 can be used as long as they are arranged to act on the connecting element 30 to bring it into a position to connect the connecting element 30 with the worm screw 15 for operating the motor vehicle transmission T through the above mentioned control cable 80.

The release device 100 further includes a locking member 50. In the example shown in the figures, such locking member is an inverted U shaped locking clip 50 that is arranged to be associated with the connecting element 30.

In the example shown in the figures of the drawings, the release device 100 includes stop means 20 associated with the shifter actuating shaft 10 for cooperating with the locking member 50.

In a first position, the stop means 20 abut the locking member 50 causing the stop means 20 to be locked against the locking member 50 only in a first direction. When the locking member 50 is in a second position, the stop means 20 do not abut the locking member 50 allowing the connecting element 30 to be moved relative to the stop means 20 in said first direction and in a second, opposite direction. In the above mentioned first position, the locking member 50 restricts the relative movement between the worm screw 15 and the connecting element 30 as it will be described below.

In the example shown, the stop means 20 comprise a protruding portion 25 formed therein for cooperating with the locking member 50. The protruding portion 25 can be formed in one side or both sides of the stop means 20 projecting therefrom. Other locations for the protruding portion 25 are possible as long as the stop means 20 are allowed to cooperate with the locking member 50. The stop means 20 could be adapted to be driven according to a longitudinal movement or they could be driven according to a rotational movement or even according to a combined longitudinal-rotational movement, as with the shifter actuating shaft 10.

On the other hand, the stop means 20 are attached to, e.g. screwed in the worm screw 15 as in the example shown. Thus, as the worm screw 15 is rotated, the stop means 20 are driven according to a longitudinal movement.

As the worm screw 15 is rotated by the motor M, the stop means 20 are caused to be displaced laterally. Specifically, the connecting element 30 can be driven to move to the left in the drawings through the above mentioned stop means 20 resulting in that the protruding portion 25 of the stop means 20 abuts the locking member 50 causing the locking member 50 to move together with the connecting element 30 to the left in the drawings. The connecting element 30 can be also driven to move to the right in the drawings. In this case, the locking member 50 moves relative to the stop means 20 through the spring return action of the compression spring 40, that is in turn compressed by the stop means 20, for operating the motor vehicle transmission T. Specifically, and referring to figures, a left end portion of the spring 40 is compressed by the stop means 20 while an opposite, right end portion of the spring 40 is expanded to the right in the figures, pulling on the connecting element 30 and the locking member 50 causing them to be moved to the right. In this case, the protruding portion 25 of the stop means 20 does not abut directly the locking member 50.

When the locking member 50 is in the second position, the protruding portion 25 of the stop means 20 does not abut the locking member 50 allowing the connecting element 30 to be moved relative to the stop means in both in said first direction and said second, opposite direction.

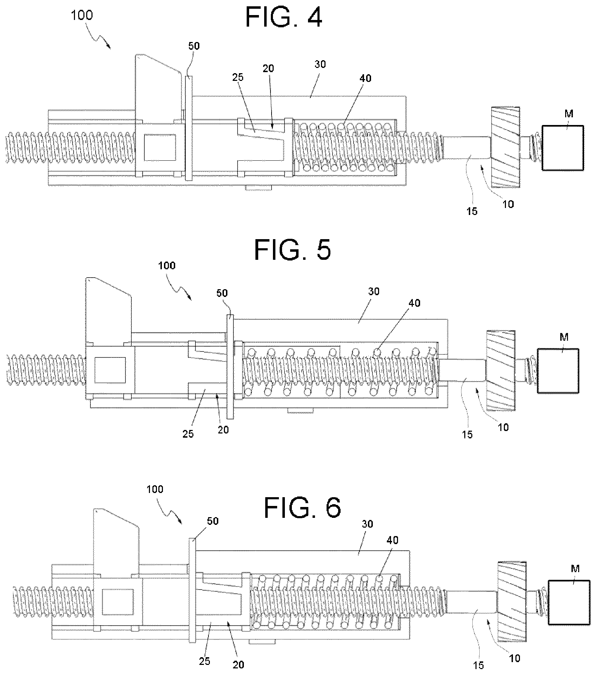

Referring now to the example shown in figure 5 and figure 6, once the locking member 50 has been moved into a specific position, the connecting element 30 can be moved along said opposite direction by the worm screw 15 when the motor vehicle transmission T is already out of the park gearshift position P and the worm screw 15 can not be actuated due, for example, to a failure in the motor power supply. This situation occurs, for example, when a so called emergency park function has been performed, that is, when the motor vehicle transmission T has been shifted into the park gearshift position P under a given condition such as a power supply failure in which the electric motor M can not be operated to drive the worm screw 15.

The present release device 100 further comprises emergency driving means 60. The emergency driving means 60 have been schematically shown in figure 1. As shown in the non-limiting example of figure 1, the emergency driving means 60 are adapted for operating the connecting element 30 so as to operate the motor vehicle transmission T out of the park gearshift position P in case the worm screw 15 can not be driven, e.g. in the event of failure of the electrical power supply to the electric motor M, as stated above.

In the example shown in figure 1 of the drawings, the emergency driving means 60 include an actuating element 65, for example, in the form of a tool, such as a screwdriver or the like. The actuating element or tool 65 is preferably an element separate from the housing 70 but insertable through a slot 75 formed therein. The tip or driving portion 66 of the screwdriver 65 is located proximate the connecting element 30 so as to push the connecting element 30 as the screwdriver 65 is moved, e.g. pivoted, by the user. As a result, the connecting element 30 is displaced to the left in the figures. This causes the control cable 80 to act on the motor vehicle transmission T to drive it out of the park gearshift position P and the compression of the biasing means 40 against the stop means 20. This of course occurs without the action of the worm screw 15 since a failure of the electrical power supply to the electric motor M has been occurred. When the motor vehicle transmission T has been released from the shifter actuating shaft 10, the actuating element 65, i.e. the tool, can be then removed from the housing 70 once the vehicle has been moved as necessary. The compressed biasing means 40 then returns to its rest position causing the connecting element 30 to be displaced to the right in the figures into its previous position and causing the control cable 80 to act on the motor vehicle transmission T again to drive it into the park gearshift position P.

Retainer means, not shown, are provided in the housing 70 for retaining the actuating element 65 in a gearshift position out of the park position P. Therefore, once the vehicle transmission T is desired to be driven into the park position P again, the retainer means are released such that the actuating element 65 can be removed from the device housing 70. The vehicle transmission T can be then driven back into the park position P through the spring effect of the biasing means 40.

More specifically, the operation of the release device 100 is as follows. When the user wishes to drive the motor vehicle transmission T, e.g. the gearbox, into a specific gearshift position, such as out of the park position P, as shown in figures 2 and 3, the shifter lever (not shown) is actuated causing the driving means, i.e. the electric motor M, to operate the worm screw 15 to the left in the drawings. This causes the protruding portion 25 of the stop means 20 to contact the locking member 50 pushing it together with the connecting element 30. The connecting element 30 is thus displaced to the left in the drawings as shown in said figures 2 and 3 of the drawings, causing the control cable 80 to be moved to the left in the drawings to drive the motor vehicle transmission T out of the park gearshift position P.

When the user wishes to drive the vehicle transmission T into the park gearshift position P, as shown in figures 2 and 3, the user operates the shifter lever (not shown) causing the electric motor M to operate the worm screw 15 in the reverse direction of rotation. This causes the compression of the compression spring 40 by the stop means 20 and causes the connecting element 30 to be moved in the reverse direction. The connecting element 30 is thus displaced to the right in the drawings as shown in figures 5 and 6 of the drawings, causing the control cable 80 to be moved also to the right in the drawings to drive the motor vehicle transmission T into the park position P.

However, if the worm screw 15 can not be operated for example when a failure in the power supply to the electric motor M has been occurred so that it can not be powered, or when it is broken, the stop means 20 can not be moved and the motor vehicle transmission T can not be driven out of the park gearshift position P. Under such condition where the vehicle is in the park gearshift position P, the vehicle can be not moved.

In this case, the user simply has to use of the release device 100 as shown in figure 1 to operate the connecting element 30 through the emergency driving means 60 as it will be now described with regard to figures 1 and 4 of the drawings. Specifically, the user simply inserts the screwdriver 65 or the like into the slot 75 of the housing 70 and moves or pivots the screwdriver 65 so as to cause the connecting element 30 to be displaced to the left in the figures causing the control cable 80 to be moved resulting in that the vehicle transmission T is driven out of the park gearshift position P, without the operation of the shifter actuating shaft 10.

Although only a number of particular examples of the present release device have been disclosed herein, it will be understood by those skilled in the art that other alternative examples and/or uses and obvious modifications and equivalents thereof are possible within the scope of the claims.

Reference signs related to drawings and placed in parentheses in a claim are solely for attempting to increase the intelligibility of the claim, and shall not be construed as limiting the scope of the claim.

## Claims

1. - A release device (100) for releasing a motor vehicle transmission (T) from a shifter actuating shaft (10) that operates the motor vehicle transmission_(10), the release device (100) comprising:
- a connecting element (30) adapted for releasably connecting a motor vehicle transmission (T) with the shifter actuating shaft (10);
- biasing means (40) acting on the connecting element (30) into a position so as to arrange the connecting element (30) and the shifter actuating shaft (10) for operating the motor vehicle transmission (T);
- a locking member (50) associated with the connecting element (30) and adapted to restrict the relative movement between the shifter actuating shaft (10) and the connecting element (30), and
- stop means (20) comprising at least one protruding portion (25) cooperating with the locking member (50) such that when the stop means (20) are driven to move along a first direction, the stop means (20) abut the locking member (50) causing the locking member (50) to move together with the connecting element (30) along said first direction operating the motor vehicle transmission (T), and when the stop means (20) are driven to move along a second, opposite direction, the stop means (20) do not abut the locking member (50) allowing the locking member (50) acting on the biasing means (40) with the biasing means (40) moving together with the connecting element (30) and the locking member (50), operating the motor vehicle transmission (T),
wherein the protruding portion (25) of the stop means (20) is arranged to cooperate with the locking member (50) such that, when the locking member (50) is in a first position, the protruding portion (25) abuts the locking member (50) causing the stop means (20) to be locked against the locking member (50) only in said first direction, and when the locking member (50) is in a second position, the protruding portion (25) does not abut the locking member (50) allowing the connecting element (30) to be moved relative to the stop means (20) in both in said first direction and said second, opposite direction,
and wherein the shifter actuating shaft (10) comprises a worm screw (15) attached to the stop means (20) such that as the worm screw (15) is rotated the stop means (20) are caused to be displaced.

2. A release device (100) for releasing a motor vehicle transmission (T) from a shifter actuating shaft (10) that operates the motor vehicle transmission_(10), the release device (100) comprising:
- a connecting element (30) adapted for releasably connecting a motor vehicle transmission (T) with the shifter actuating shaft (10);
- biasing means (40) acting on the connecting element (30) into a position so as to arrange the connecting element (30) and the shifter actuating shaft (10) for operating the motor vehicle transmission (T);
- a locking member (50) associated with the connecting element (30) and adapted to restrict the relative movement between the shifter actuating shaft (10) and the connecting element (30), and
- stop means (20) comprising at least one protruding portion (25)cooperating with the locking member (50) such that when the stop means (20) are driven to move along a first direction, the stop means (20) abut the locking member (50) causing the locking member (50) to move together with the connecting element (30) along said first direction operating the motor vehicle transmission (T), and when the stop means (20) are driven to move along a second, opposite direction, the stop means (20) do not abut the locking member (50) allowing the locking member (50) acting on the biasing means (40) with the biasing means (40) moving together with the connecting element (30) and the locking member (50), operating the motor vehicle transmission (T),
wherein the protruding portion (25) of the stop means (20) is arranged to cooperate with the locking member (50) such that, when the locking member (50) is in a first position, the protruding portion (25) abuts the locking member (50) causing the stop means (20) to be locked against the locking member (50) only in said first direction, and when the locking member (50) is in a second position, the protruding portion (25) does not abut the locking member (50) allowing the connecting element (30) to be moved relative to the stop means (20) in both in said first direction and said second, opposite direction. wherein the shifter actuating shaft (10) is adapted to be driven according to a longitudinal movement, and
wherein the stop means (20) are formed integral with the shifter actuating shaft (10).

3. The device (100) of any of the preceding claims, wherein it includes driving means for driving the shifter actuating shaft (10) for operating the motor vehicle transmission (T).

4. The device (100) of any of the preceding claims, wherein it further comprises emergency driving means (60) for operating the connecting element (30) so as to operate the motor vehicle transmission (T) out of one gearshift position (P) in case the shifter actuating shaft (10) can not be driven.

5. The device (100) of claim 4, wherein the emergency driving means (60) include an actuating element (65) having a driving portion (66) located proximate the connecting element (30) so as to push it in order to drive the motor vehicle transmission (T) out of the one gearshift position (P) in case the shifter actuating shaft (10) can not be driven.

6. The device (100) of claim 4 or 5 , wherein the emergency driving means (60) include a slot (75) formed in a housing (70) where at least the stop means (20) and the connecting element (30) are received, said slot (75) being adapted for receiving the actuating element (65).

7. The device (100) of claim 5 or 6, wherein the actuating element (65) comprises at least one selected from a tool, a flange, a rod, a key and the like.

8. A vehicle transmission (T) comprising a shifter actuating shaft (10) for operating the transmission (T) into different gearshift positions (P, R, N, D), and the release device (100) of any of the preceding claims for releasing the vehicle transmission (T) from the shifter actuating shaft (10).

## Patentansprüche

1. - Eine Auslösevorrichtung (100) zum Auslösen eines Kraftfahrzeuggetriebes (T) von einer Wählhebelantriebswelle (10), die das Kraftfahrzeuggetriebe (10) betätigt, wobei die Auslösevorrichtung (100) Folgendes umfasst:
- ein Verbindungselement (30), das angepasst ist, um ein Kraftfahrzeuggetriebe (T) mit der Wählhebelantriebswelle (10) zu verbinden;
- ein Vorspannmittel (40), welches das Verbindungselement (30) in eine Position bringt, um das Verbindungselement (30) und die Wählhebelantriebswelle (10) zum Betätigen des Kraftfahrzeuggetriebes (T) anzuordnen;
- ein Arretierelement (50), das dem Verbindungselement (30) zugeordnet ist und angepasst ist, um die Relativbewegung zwischen der Wählhebelantriebswelle (10) und dem Verbindungselement (30) zu beschränken, und
- ein Anschlagmittel (20) umfassend mindestens einen vorstehenden Abschnitt (25), der mit dem Arretierelement (50) zusammenwirkt, so dass, wenn das Anschlagmittel (20) angetrieben wird, um entlang einer ersten Richtung bewogen zu werden, das Anschlagmittel (20) an dem Arretierelement (50) anliegt, was dazu führt, dass das Arretierelement (50) zusammen mit dem Verbindungselement (30) entlang der ersten Richtung bewogen wird und somit das Kraftfahrzeuggetriebe (T) betätigt wird, und wenn das Anschlagmittel (20) angetrieben wird, um entlang einer zweiten, entgegengesetzten Richtung bewogen zu werden, das Anschlagmittel (20) nicht an dem Arretierelement (50) anliegt, was das Einwirken des Arretierelements (50) auf das Vorspannmittel (40) ermöglicht, wobei das Vorspannmittel (40) sich zusammen mit dem Verbindungselement (30) und dem Arretierelement (50) bewegt, was das Kraftfahrzeuggetriebe (T) betätigt,
wobei der vorstehende Abschnitt (25) des Anschlagmittels (20) angeordnet ist, um mit dem Arretierelement (50) zusammenzuwirken, so dass, wenn sich das Arretierelement (50) in einer ersten Position befindet, der vorstehende Abschnitt (25) an dem Arretierelement (50) anliegt, wodurch bewirkt wird, dass das Anschlagmittel (20) nur in der ersten Richtung gegen das Arretierelement (50) arretiert wird, und wenn sich das Arretierelement (50) in einer zweiten Position befindet, der vorstehende Abschnitt (25) nicht an dem Arretierelement (50) anliegt, wodurch ermöglicht wird, dass das Verbindungselement (30) relativ zum Anschlagmittel (20) sowohl in die erste Richtung als auch in die zweite, entgegengesetzte Richtung bewogen wird,
und wobei die Wählhebelantriebswelle (10) eine Schneckenschraube (15) umfasst, die an dem Anschlagmittel (20) befestigt ist, so dass eine Verschiebung des Anschlagmittels (20) verursacht wird, wenn die Schneckenschraube (15) gedreht wird.

2. Eine Auslösevorrichtung (100) zum Auslösen eines Kraftfahrzeuggetriebes (T) von einer Wählhebelantriebswelle (10), die das Kraftfahrzeuggetriebe (10) betätigt, wobei die Auslösevorrichtung (100) Folgendes umfasst:
- ein Verbindungselement (30), das angepasst ist, um ein Kraftfahrzeuggetriebe (T) mit der Wählhebelantriebswelle (10) zu verbinden;
- ein Vorspannmittel (40), welches das Verbindungselement (30) in eine Position bringt, um das Verbindungselement (30) und die Wählhebelantriebswelle (10) zum Betätigen des Kraftfahrzeuggetriebes (T) anzuordnen;
- ein Arretierelement (50), das dem Verbindungselement (30) zugeordnet ist und angepasst ist, die Relativbewegung zwischen der Wählhebelantriebswelle (10) und dem Verbindungselement (30) zu beschränken, und
- ein Anschlagmittel (20) umfassend mindestens einen vorstehenden Abschnitt (25), der mit dem Arretierelement (50) zusammenwirkt, so dass, wenn das Anschlagmittel (20) angetrieben wird, um entlang einer ersten Richtung bewogen zu werden, das Anschlagmittel (20) an dem Arretierelement (50) anliegt, was dazu führt, dass das Arretierelement (50) zusammen mit dem Verbindungselement (30) entlang der ersten Richtung bewogen wird und somit das Kraftfahrzeuggetriebe (T) betätigt wird, und wenn das Anschlagmittel (20) angetrieben wird, um entlang einer zweiten, entgegengesetzten Richtung bewogen zu werden, das Anschlagmittel (20) nicht an dem Arretierelement (50) anliegt, was das Einwirken des Arretierelements (50) auf das Vorspannmittel (40) ermöglicht, wobei das Vorspannmittel (40) sich zusammen mit dem Verbindungselement (30) und dem Arretierelement (50) bewegt, was das Kraftfahrzeuggetriebe (T) betätigt,
wobei der vorstehende Abschnitt (25) des Anschlagmittels (20) angeordnet ist, um mit dem Arretierelement (50) zusammenzuwirken, so dass, wenn sich das Arretierelement (50) in einer ersten Position befindet, der vorstehende Abschnitt (25) an dem Arretierelement (50) anliegt, wodurch bewirkt wird, dass das Anschlagmittel (20) nur in der ersten Richtung gegen das Arretierelement (50) arretiert wird, und wenn sich das Arretierelement (50) in einer zweiten Position befindet, der vorstehende Abschnitt (25) nicht an dem Arretierelement (50) anliegt, wodurch ermöglicht wird, dass das Verbindungselement (30) relativ zum Anschlagmittel (20) sowohl in die erste Richtung als auch in die zweite entgegengesetzte Richtung bewogen wird, wobei die Wählhebelantriebswelle (10) angepasst ist, um gemäß einer Längsbewegung angetrieben zu werden, und
wobei das Anschlagmittel (20) einstückig mit der Wählhebelantriebswelle (10) ausgebildet ist.

3. Die Vorrichtung (100) von einem der vorhergehenden Ansprüche, wobei sie ein Antriebsmittel zum Antreiben der Wählhebelantriebswelle (10) zum Betreiben des Kraftfahrzeuggetriebes (T) umfasst.

4. Die Vorrichtung (100) von einem der vorhergehenden Ansprüche, wobei sie weiterhin ein Notantriebsmittel (60) zum Betätigen des Verbindungselements (30) umfasst, um das Kraftfahrzeuggetriebe (T) aus einer Gangschaltstellung (P) heraus zu betätigen, falls die Wählhebelantriebswelle (10) nicht angetrieben werden kann.

5. Die Vorrichtung (100) des Anspruchs 4, wobei das Notantriebsmittel (60) ein Betätigungselement (65) mit einem Antriebsabschnitt (66) umfasst, der in der Nähe des Verbindungselements (30) angeordnet ist, um es zu drücken, um das Kraftfahrzeuggetriebe (T) aus der einen Schaltstellung (P) heraus zu betätigen, falls die Wählhebelantriebswelle (10) nicht angetrieben werden kann.

6. Die Vorrichtung (100) des Anspruchs 4 oder 5, wobei das Notantriebsmittel (60) einen Schlitz (75) umfasst, der in einem Gehäuse (70) ausgebildet ist, wo zumindest das Anschlagmittel (20) und das Verbindungselement (30) aufgenommen werden, wobei der Schlitz (75) angepasst ist, um das Betätigungselement (65) aufzunehmen.

7. Die Vorrichtung (100) des Anspruchs 5 oder 6, wobei das Betätigungselement (65) mindestens eines umfasst, das aus einem Werkzeug, einem Flansch, einer Stange, einem Schlüssel und dergleichen ausgewählt ist.

8. Ein Fahrzeuggetriebe (T) umfassend eine Wählhebelantriebswelle (10) zum Betätigen des Getriebes (T) in verschiedene Gangschaltstellungen (P, R, N, D), und die Auslösevorrichtung (100) von einem der vorhergehenden Ansprüche zum Lösen des Fahrzeuggetriebes (T) aus der Wählhebelantriebswelle (10).

## Revendications

1. - Un dispositif de débrayage (100) pour débrayer une transmission de véhicule à moteur (T) d'un arbre d'actionnement de levier de vitesses (10) qui fait fonctionner la transmission de véhicule à moteur (10), le dispositif de débrayage (100) comprenant :
- un élément de connexion (30) adapté pour connecter de manière débrayable une transmission de véhicule à moteur (T) avec l'arbre d'actionnement de levier de vitesses (10) ;
- un moyen de sollicitation (40) agissant sur l'élément de connexion (30) dans une position de manière à disposer l'élément de connexion (30) et l'arbre d'actionnement de levier de vitesses (10) pour faire fonctionner la transmission de véhicule à moteur (T) ;
- un élément de blocage (50) associé à l'élément de connexion (30) et adapté pour restreindre le mouvement relatif entre l'arbre d'actionnement de levier de vitesses (10) et l'élément de connexion (30), et
- un moyen d'arrêt (20) comprenant au moins une partie saillante (25) coopérant avec l'élément de blocage (50) de telle sorte que, lorsque le moyen d'arrêt (20) est entraîné pour se déplacer le long d'une première direction, le moyen d'arrêt (20) vient en butée contre l'élément de blocage (50) provoquant le déplacement de l'élément de blocage (50) avec l'élément de connexion (30) le long de ladite première direction, ce qui fait fonctionner la transmission de véhicule à moteur (T) et, lorsque le moyen d'arrêt (20) est entraîné pour se déplacer le long d'une seconde direction opposée, le moyen d'arrêt (20) ne vient pas en butée contre l'élément de blocage (50) permettant que l'élément de blocage (50) agisse sur le moyen de sollicitation (40) avec le moyen de sollicitation (40) se déplaçant conjointement avec l'élément de connexion (30) et l'élément de blocage (50), ce qui fait fonctionner la transmission du véhicule à moteur (T),
dans lequel la partie saillante (25) du moyen d'arrêt (20) est agencée de manière à coopérer avec l'élément de blocage (50) de telle sorte que, lorsque l'élément de blocage (50) est dans une première position, la partie saillante (25) vient en butée contre l'élément de blocage (50) provoquant le blocage du moyen d'arrêt (20) contre l'élément de blocage (50) uniquement dans ladite première direction et, lorsque l'élément de blocage (50) est dans une seconde position, la partie saillante (25) ne vient pas en butée contre l'élément de blocage (50) permettant un déplacement de l'élément de connexion (30) par rapport au moyen d'arrêt (20) dans ladite première direction et dans ladite seconde direction opposée,
et dans lequel l'arbre d'actionnement de levier de vitesses (10) comprend une vis sans fin (15) fixée au moyen d'arrêt (20) de telle sorte que lorsque la vis sans fin (15) est tournée, le moyen d'arrêt (20) est amené à se déplacer.

2. Un dispositif de débrayage (100) pour débrayer une transmission de véhicule à moteur (T) d'un arbre d'actionnement de changement de vitesses (10) qui fait fonctionner la transmission de véhicule à moteur (10), le dispositif de débrayage (100) comprenant :
- un élément de connexion (30) adapté pour connecter de manière libérable une transmission de véhicule à moteur (T) avec l'arbre d'actionnement de levier de vitesses (10) ;
- un moyen de sollicitation (40) agissant sur l'élément de connexion (30) dans une position de manière à disposer l'élément de connexion (30) et l'arbre d'actionnement de changement de vitesses (10) pour faire fonctionner la transmission de véhicule à moteur (T) ;
- un élément de blocage (50) associé à l'élément de connexion (30) et adapté pour restreindre le mouvement relatif entre l'arbre d'actionnement de levier de vitesses (10) et l'élément de connexion (30), et
- un moyen d'arrêt (20) comprenant au moins une partie saillante (25) coopérant avec l'élément de blocage (50) de telle sorte que lorsque le moyen d'arrêt (20) est entraîné pour se déplacer le long d'une première direction, le moyen d'arrêt (20) vient en butée contre l'élément de blocage (50) provoquant le déplacement de l'élément de blocage (50) avec l'élément de connexion (30) le long de ladite première direction ce qui fait fonctionner la transmission de véhicule à moteur (T), et lorsque le moyen d'arrêt (20) est entraîné pour se déplacer le long d'une seconde direction opposée, le moyen d'arrêt (20) ne vient pas en butée contre l'élément de blocage (50) permettant que l'élément de blocage (50) agisse sur le moyen de sollicitation (40) avec le moyen de sollicitation (40) se déplaçant conjointement avec l'élément de connexion (30) et l'élément de blocage (50), actionnant la transmission du véhicule à moteur (T),
dans lequel la partie saillante (25) du moyen d'arrêt (20) est agencée de manière à coopérer avec l'élément de blocage (50) de telle sorte que, lorsque l'élément de blocage (50) est dans une première position, la partie saillante (25) vient en butée contre l'élément de blocage (50) provoquant le blocage du moyen d'arrêt (20) contre l'élément de blocage (50) uniquement dans ladite première direction, et lorsque l'élément de blocage (50) est dans une seconde position, la partie saillante (25) ne vient pas en butée contre l'élément de blocage (50) permettant un déplacement de l'élément de connexion (30) par rapport au moyen d'arrêt (20) dans ladite première direction et dans ladite seconde direction opposée, dans lequel l'arbre d'actionnement de changement de vitesses (10) est adapté pour être actionné selon un mouvement longitudinal, et
dans lequel le moyen d'arrêt (20) est formé d'un seul tenant avec l'arbre d'actionnement de levier de vitesses (10).

3. Le dispositif (100) de l'une quelconque des revendications précédentes, dans lequel il inclut des moyens d'entraînement pour entraîner l'arbre d'actionnement de levier de vitesses (10) pour faire fonctionner la transmission de véhicule à moteur (T).

4. Le dispositif (100) de l'une quelconque des revendications précédentes, dans lequel il comprend en outre des moyens d'entraînement de secours (60) pour faire fonctionner l'élément de connexion (30) de manière à faire fonctionner la transmission de véhicule à moteur (T) hors d'une position de changement de vitesse (P) au cas où l'arbre d'actionnement de levier de vitesses (10) ne pourrait pas être entraîné.

5. Le dispositif (100) de la revendication 4, dans lequel le moyen d'entraînement de secours (60) inclut un élément d'actionnement (65) ayant une partie d'entraînement (66) située à proximité de l'élément de connexion (30) de manière à le pousser afin d'entraîner la transmission de véhicule à moteur (T) hors de la position de changement de vitesse (P) au cas où l'arbre d'actionnement de levier de vitesses (10) ne pourrait pas être entraîné.

6. Le dispositif (100) de la revendication 4 ou 5, dans lequel le moyen d'entraînement de secours (60) inclut une fente (75) formée dans un boîtier (70) où au moins le moyen d'arrêt (20) et l'élément de connexion (30) sont reçus, ladite fente (75) étant adaptée pour recevoir l'élément d'actionnement (65).

7. Le dispositif (100) de la revendication 5 ou 6, dans lequel l'élément d'actionnement (65) comprend au moins un élément sélectionné parmi un outil, une bride, une tige, une clé et similaire.

8. Une transmission de véhicule (T) comprenant un arbre d'actionnement de levier de vitesses (10) pour faire fonctionner la transmission (T) dans de différentes positions de changement de vitesse (P, R, N, D), et le dispositif de débrayage (100) de l'une quelconque des revendications précédentes pour débrayer la transmission du véhicule (T) de l'arbre d'actionnement de levier de vitesses (10).
